# EUROPEAN PATENT APPLICATION

(11) **EP 2 295 780 A1**
(43) Date of publication of application: **16.03.2011**
(21) Application number: 10008384.9
(22) Date of filing: 11.08.2010
(51) Int. Cl.: F02M 25/07, F02B 37/16, F02B 37/18

(54) **Hybrid intake system for superatmospheric charging of an engine intake manifold using lowpressure EGR/fresh air blending**

(30) Priority: 12.08.2009 US 539938
(71) Applicant: International Engine Intellectual Property Company, LLC, Warrenville IL 60555 (US)
(72) Inventor: Wood, Terry G., Countryside, IL 60525 (US); Wu, Shouhao, Roselle, IL 60172 (US); Pavlicek, Brian B., Homer Glen, Il 60491 (US)
(74) Representative: Kuhnen & Wacker

(57) **Abstract**

An intake manifold (16) of an internal combustion engine (10) is charged to superatmospheric pressure by operating a first compressor (44) to compress fresh air diluted by exhaust gas into the intake manifold while operating a second compressor (24C) to compress undiluted fresh air into the intake manifold through a device (40) that allows flow in a direction from the second compressor into the intake manifold but not in an opposite direction.

## Description

### Technical Field

This disclosure relates to internal combustion engines, such as diesel engines for propelling motor vehicles, that have charging devices for creating superatmospheric pressure, i.e. boost) in an intake manifold and that use exhaust gas recirculation (EGR) as a component of a tailpipe emission control strategy.

### Background of the Disclosure

One EGR strategy for a turbocharged diesel engine comprises the use of a high-pressure EGR loop that has a pierce point to the engine exhaust system at, or close to, an exhaust manifold. An EGR valve controls the flow of recirculated exhaust gas to a mixer in the engine intake system where the exhaust gas mixes with fresh air that has been compressed by a turbocharger compressor before the mixture enters an intake manifold serving engine cylinders.

By metering a controlled amount of exhaust gas into the fresh air, the EGR valve effectively dilutes the air so that in-cylinder temperature rise resulting from combustion is limited from the rise which would occur in the absence of such dilution. As a consequence, the quantity of oxides of nitrogen (NOx) in the exhaust gas that results from combustion is also limited.

Because exhaust gas for a high-pressure EGR loop is sourced directly from the engine exhaust manifold without any appreciable cooling, it is quite hot, and that compels the recirculation path that contains the EGR valve to provide sufficient heat rejection for enabling the exhaust gas that mixes with fresh air to be suitably cooled before it entrains with the fresh air in the intake system.

In order to provide adequate cooling, the recirculation path typically comprises a gas-to-liquid heat exchanger functioning as an EGR cooler. The greater the amount of cooling needed, the larger the heat rejection capacity of the EGR cooler, and if the EGR valve is upstream of the EGR cooler, the valve is exposed to high-temperature exhaust coming off the exhaust manifold. Use of an EGR cooler in the recirculation path also creates a potential for condensation of constituents in the gas that can eventually lead to fouling of EGR components.

Another EGR strategy for a turbocharged diesel engine comprises the use of a low-pressure EGR loop that has a pierce point to the engine exhaust system that is downstream of a turbocharger turbine. An EGR valve still controls the flow of recirculated exhaust gas to a mixer in the engine intake system, but the mixer is upstream of the turbocharger compressor, requiring that the compressor to be sized large enough to handle not only the fresh air mass but also that of the added EGR. For large amounts of EGR, this raises a potential turbocharger mismatch issue and can affect turbocharger response.

### Summary of the Disclosure

This disclosure relates to an internal combustion engine comprising engine cylinders within which combustion of fuel occurs to operate the engine, an air intake system comprising an intake manifold through which air enters the engine cylinders to support the combustion of fuel, and an exhaust system for conveying combustion-created exhaust gas from the engine cylinders.

The air intake system further comprises a fresh air entrance leading to mutually parallel first and second flow paths to the intake manifold.

The first flow path comprises a compressor of a turbocharger having a turbine operated by exhaust gas being conveyed through the exhaust system and a heat exchanger through which air compressed by the compressor passes.

The second flow path comprises an initial portion that places the fresh air entrance in communication with a first inlet port of a valve that further comprises a second inlet port, an outlet port, and a mechanism for selectively setting relative proportions of respective flows that have entered the first inlet port and the second inlet port in a combined flow leaving the outlet port.

An EGR flow path conveys exhaust gas from the exhaust system to the second inlet port of the valve, and the second flow path comprises a final portion that comprises a positive displacement pump for compressing the flow from the outlet port of the valve and a heat exchanger through which compressed flow from the positive displacement pump passes to the intake manifold.

The disclosure also relates to a method of charging an intake manifold of an internal combustion engine to superatmospheric pressure comprising: operating a first compressor to compress fresh air diluted by exhaust gas into the intake manifold while operating a second compressor to compress undiluted fresh air into the intake manifold through a device that allows flow in a direction from the second compressor into the intake manifold but not in an opposite direction.

The foregoing summary is accompanied by further detail of the disclosure presented in the Detailed Description below with reference to the following drawings that are part of the disclosure.

### Brief Description of the Drawings

Figure 1 is a schematic diagram showing a diesel engine and components relevant to the present disclosure.

Figure 2 is a drawing showing more detail of a portion of Figure 1.

### Detailed Description

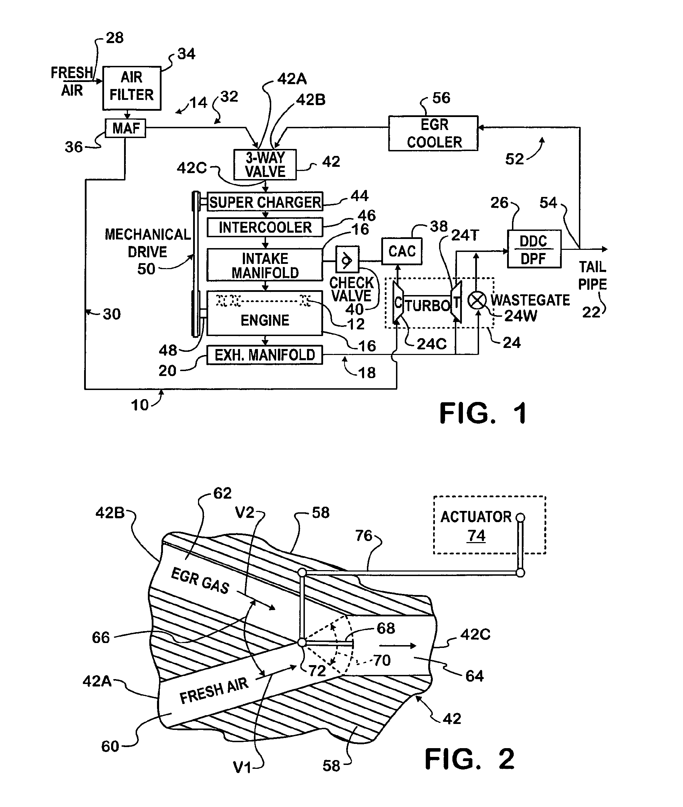

Figure 1 shows an engine 10 having structural components assembled together to form engine cylinders 12 within which combustion of fuel occurs to operate a kinematic mechanism comprising pistons, connecting rods, and a crankshaft. Fresh air for supporting combustion of fuel is delivered to cylinders 12 through an air intake system 14 that comprises an intake manifold 16 serving cylinders 12.

An exhaust system 18 comprises an exhaust manifold 20 at which combustion-created exhaust gases from cylinders 12 enter the exhaust system for conveyance to a tailpipe 22 through which they pass into the surrounding atmosphere. Exhaust gases leaving exhaust manifold 20 pass through a turbocharger 24 before passing through one or more exhaust after-treatment devices 26 and then tailpipe 22. Examples of exhaust after-treatment devices are a diesel particulate filter (DPF) and a diesel oxidation catalyst (DOC).

Turbocharger 24 is shown as a wastegate type turbocharger comprising a turbine 24T shunted by a wastegate 24W that sets respective quantities of exhaust gases that pass through and that by-pass turbine 24T. The exhaust gas quantity that passes through turbine 24T operates turbine 24T and consequently a turbocharger compressor 24C which is disposed in air intake system 14 and to which turbine 24T is mechanically coupled.

Air intake system 14 comprises a fresh air entrance 28 leading to mutually parallel first and second flow paths 30, 32 respectively. Before it splits into these respective flow paths, the entering airflow passes through an air filter 34 and then a mass airflow measuring device 36.

Flow path 30 comprises compressor 24C and a charge air cooler (CAC) 38 through which air compressed by the compressor passes. CAC 38 is a heat exchanger that can be an air-to-liquid type or an air-to-air type for cooling the compressed air. A check valve 40 allows airflow from CAC 38 to move forward into intake manifold 16 but prevents reverse flow from intake manifold 16.

Flow path 32 comprises a valve 42, a supercharger 44, and an intercooler 46, in that order, for conveying flow to intake manifold 16. Supercharger 44 comprises a positive displacement rotary pump, such as a screw machine type pump, that is mechanically driven by torque obtained from an external shaft end 48 of the engine crankshaft. Figure 1 shows an example of a mechanical drive 50 as a belt drive that couples respective sheaves on the shaft end 48 and supercharger pump. Intercooler 46 is a heat exchanger through which the flow that has been compressed by supercharger 44 passes, and is portrayed by way of example as an air-to-liquid type heat exchanger.

An exhaust gas recirculation flow path 52 has an entrance 54 at a pierce point to exhaust system 18 that is downstream of after-treatment devices 26. From there, flow path 52 continues through an EGR cooler 56 to valve 42.

Valve 42 comprises a first inlet port 42A, a second inlet port 42B, and an outlet port 42C. An initial portion of flow path 32 communicates fresh air to inlet port 42A while a final portion that contains supercharger 44 and intercooler 46 communicates outlet port 42C to intake manifold 16.

Valve 42 is shown in more detail in Figure 2 to comprise a Y-body 58 having convergent passages 60, 62 from inlet ports 42A, 42B respectively. From the convergence of passages 60, 62, a passage 64 extends to outlet port 42C.

Y-body 58 provides for respective flows that have entered inlet port 42A and inlet port 42B to approach each other along imaginary vectors V1 and V2 at an acute angle 66. Valve 42 further comprises an internal mechanism in the form of a blade 68 that is selectively positionable over an angular range 70 about an axis 72 for selectively setting relative proportions of respective flows that have entered inlet port 42A and inlet port 42B to form a combined flow leaving outlet port 42C.

Blade 68 is effective to set the relative proportions by channeling the respective flows from vectors V1 and V2 with various degrees of restriction depending on the angular position of the blade about axis 72 which is perpendicular to a plane containing vectors V1 and V2. The positioning of blade 68 about axis 72 is controlled by an actuator 74 that acts on blade 68 via a linkage 76. At the midpoint of angular range 70, each approaching flow is partially restricted by blade 68. As blade 68 swings in either direction, it increasingly restricts one approaching flow while decreasing restriction of the other.

Valve may be considered a swing gate type control valve that creates small pressure loss while being capable of modulating the outlet flow over a range extending from 0% EGR to 100% EGR.

The disclosed arrangement may provide improved fuel economy because of improved boost-to-exhaust back pressure relationship, may meet relevant specifications without two-stage turbocharging, and without variable geometry turbocharging that is sometimes used to control exhaust manifold pressure for EGR control. Because the entire exhaust gas flow leaving exhaust manifold 20 flows through turbocharger 24, improved turbocharger response also becomes possible. Recirculated exhaust gas is relatively clean and cool because it is sourced downstream of the turbine and after-treatment devices.

An engine 10 operates, supercharger 44 pumps a controlled combination of relatively cooler, relatively cleaner EGR and fresh air through intercooler 46 into intake manifold 16 in parallel with a conventional wastegate turbocharger 24 that is exclusively forcing fresh air through charge air cooler 38. Turbocharger 24 is sized to supply a majority of the supercharged air in intake manifold 16at most engine operating conditions, particularly those beyond light load and low speed. Supercharger 44 may supply a majority of the charge air in intake manifold and an appropriate quantity of relatively cooler and cleaner recirculated exhaust gas at light load/low speed engine operation, and that allows the engine to have improved transient response.

## Claims

1. An internal combustion engine comprising:
engine cylinders within which combustion of fuel occurs to operate the engine;
an air intake system comprising an intake manifold through which air enters the engine cylinders to support the combustion of fuel;
an exhaust system for conveying combustion-created exhaust gas from the engine cylinders;
the air intake system further comprising a fresh air entrance leading to mutually parallel first and second flow paths to the intake manifold,
the first flow path comprising a compressor of a turbocharger having a turbine operated by exhaust gas being conveyed through the exhaust system and a heat exchanger through which air compressed by the compressor passes,
the second flow path comprising an initial portion that places the fresh air entrance in communication with a first inlet port of a valve that further comprises a second inlet port, an outlet port, and a mechanism for selectively setting relative proportions of respective flows that have entered the first inlet port and the second inlet port in a combined flow leaving the outlet port,
an EGR flow path for conveying exhaust gas from the exhaust system to the second inlet port of the valve, and
the second flow path comprising a final portion that comprises a positive displacement pump for compressing the flow from the outlet port of
the valve and a heat exchanger through which compressed flow from the positive displacement pump passes to the intake manifold.

2. An internal combustion engine as set forth in Claim 1 further comprising a reverse flow prevention device for preventing reverse flow from the intake manifold to the first flow path.

3. An internal combustion engine as set forth in Claim 2 in which the reverse flow prevention device comprises a check valve that allows forward flow into the intake manifold and disallows reverse flow from the intake manifold.

4. An internal combustion engine as set forth in Claim 1 in which the positive displacement pump is mechanically driven by the engine.

5. An internal combustion engine as set forth in Claim 1 in which the EGR flow path comprises a pierce point to the exhaust system disposed downstream of the turbine of the turbocharger.

6. An internal combustion engine as set forth in Claim 5 in which the exhaust system includes at least one exhaust after-treatment device downstream of the turbine, and the pierce point to the exhaust system is disposed downstream of the at least one exhaust after-treatment device.

7. An internal combustion engine as set forth in Claim 1 in which the valve comprises a Y-body that provides for respective flows that have entered the first inlet port and the second inlet port to approach each other at an acute angle, and the mechanism of the valve comprises a blade that is selectively positionable for selectively setting relative proportions of respective flows that have entered the first inlet port and the second inlet port in the combined flow leaving the outlet port by selectively deflecting the respective flows that have entered the first inlet port and the second inlet port.

8. An internal combustion engine as set forth in Claim 7 in which the blade is arranged to swing about an axis that is perpendicular to a plane containing imaginary vectors representing directions of respective flows that have entered the first inlet port and the second inlet port.

9. An internal combustion engine as set forth in Claim 1 further including an air filter disposed to filter fresh air entering the fresh air entrance and a mass airflow measuring device disposed to measure airflow leaving the air filter before diverging into the first and second flow paths.

10. An internal combustion engine as set forth in Claim 1 in which the EGR flow path provides the entire quantity of exhaust gas being recirculated to the intake manifold.

11. An internal combustion engine as set forth in Claim 10 in which the entire quantity of exhaust gas leaving the exhaust manifold flows through the turbocharger.

12. An internal combustion engine as set forth in Claim 1 in which the entire quantity of exhaust gas leaving the exhaust manifold flows through the turbocharger.

13. An internal combustion engine as set forth in Claim 1 in which the EGR flow path includes an EGR cooler disposed between the exhaust system and the second inlet port of the valve.

14. A method of charging an intake manifold of an internal combustion engine to superatmospheric pressure comprising:
operating a first compressor to compress fresh air diluted by exhaust gas into the intake manifold while operating a second compressor to compress undiluted fresh air into the intake manifold through a device that allows flow in a direction from the second compressor into the intake manifold but not in an opposite direction.

15. A method as set forth in Claim 14 in which the step of operating the first compressor comprises mechanically driving the first compressor by torque from a crankshaft of the engine.

16. A method as set forth in Claim 15 in which the step of mechanically driving the first compressor by torque from a crankshaft of the engine comprises driving a positive displacement screw type pump to compress fresh air diluted by exhaust gas into the intake manifold.

17. A method as set forth in Claim 14 in which the step of operating the second compressor comprises mechanically driving the second compressor by a turbine that is operated by exhaust gas flow through an exhaust system of the engine.

18. A method as set forth in Claim 17 in which the step of mechanically driving the second compressor by a turbine that is operated by exhaust gas flow through an exhaust system of the engine comprises driving the second compressor by a wastegate type turbine.

19. A method as set forth in Claim 14 further comprising delivering fresh air diluted by exhaust gas to the first compressor through a valve that comprises a Y-body that causes fresh air delivered to a first inlet port of the Y-body and exhaust gas delivered to a second inlet port of the Y-body to approach each other at an acute angle, and selectively positioning a blade within the Y-body to set relative proportions fresh air and exhaust gas that have entered the first inlet port and the second inlet port in a combined flow leaving an outlet port of the Y-body.

20. A method as set forth in Claim 19 in which the step of selectively positioning the blade within the Y-body comprises selectively positioning the blade about an axis that is perpendicular to a plane containing imaginary vectors representing directions of respective flows that have entered the first inlet port and the second inlet port.
